# EUROPÄISCHE PATENTSCHRIFT

(11) **EP 1 948 420 B1**
(45) Veröffentlichungstag und Bekanntmachung des Hinweises auf die Patenterteilung: **11.11.2009**
(21) Anmeldenummer: 06849401.2
(22) Anmeldetag: 15.09.2006
(51) Int. Cl.: B29C 47/08, F16H 1/22

(54) **GETRIEBE FÜR EINEN ZWEISCHNECKENEXTRUDER**
GEAR SYSTEM FOR A TWIN-SCREW EXTRUDER
TRANSMISSION POUR EXTRUDEUSE A DOUBLE VIS

(30) Priorität: 19.09.2005 AT 15402005
(43) Veröffentlichungstag der Anmeldung: 30.07.2008
(73) Patentinhaber: Theysohn Extrusionstechnik Gesellschaft m.b.H., 2100 Korneuburg (AT)
(72) Erfinder: SCHNABL, Erwin, A-2120 Wolkersdorf im Weinviertel (AT)
(74) Vertreter: Müllner, Martin
(86) Internationale Anmeldenummer: PCT/EP2006/066413
(87) Internationale Veröffentlichungsnummer: WO 2007/093228

(56) Entgegenhaltungen:
- EP-A1- 0 374 463
- EP-A1- 0 962 298
- EP-A2- 0 995 580
- DE-A1- 3 325 395
- US-A- 3 824 875

## Beschreibung

### Technisches Gebiet

Die Erfindung bezieht sich auf ein Getriebe gemäß dem Oberbegriff des Anspruchs 1.

### Stand der Technik

Das Problem beim Antrieb von Doppelschneckenextrudern besteht darin, dass auf zwei Abtriebswellen, die nur sehr geringen Abstand zueinander aufweisen, sehr hohe Drehmomente übertragen werden müssen. Man bildet die beiden Abtriebswellen des Getriebes unterschiedlich lang aus. Auf die längere Abtriebswelle kann man ein beliebig großes Antriebszahnrad setzen, sodass die Kräfte auf dieses Antriebszahnrad (infolge des großen Durchmessers) trotz hohen Drehmoments in vernünftigen Grenzen gehalten werden können. Auf der kürzeren Abtriebswelle kann man aber nur ein Ritzel mit relativ geringem Durchmesser aufbringen, weil es andernfalls mit der längeren Abtriebswelle kollidieren würde. Dies bedeutet, dass die Kräfte auf dieses Ritzel bei hohem Drehmoment extrem groß sind. Der Druck auf die Zähne des Ritzels lässt sich auch nur begrenzt durch eine größere Breite des Ritzels (in Längsrichtung der Abtriebswelle) verhindern, weil sich die Abtriebswelle bei hohem Drehmoment verwindet, sodass dann nur ein Teil der Breite des Ritzels an der Kraftübertragung teilnimmt. Aus dem Druck, dem die Zähne des Ritzels standhalten, bzw. den radialen Kräften, die die Radiallager aufnehmen können, einerseits und dem Durchmesser des Ritzels anderseits ergibt sich somit ein maximales Drehmoment, das man auf die kürzere Abtriebswelle übertragen kann.

Die Drehmomente, denen die Schnecken gewachsen sind, werden infolge von Materialverbesserungen immer größer, sodass immer stärkere Getriebe gefordert werden. Um nun auf die kürzere Abtriebswelle ein höheres Drehmoment übertragen zu können, wurde in der
AT 351235 B --.
vorgeschlagen, das Ritzel der kürzeren Abtriebswelle nicht durch ein Zahnrad, sondern durch zwei Zahnräder anzutreiben, sodass das übertragbare Drehmoment dadurch etwa verdoppelt wird. Zu diesem Zweck sind zwei Veiteilerwellen vorgesehen, die einerseits mit dem Ritzel auf der kürzeren Antriebswelle und anderseits mit dem Antriebszahnrad auf der längeren Antriebswelle kämmen.

Nachteilig ist dabei, dass die beiden Verteilerwellen nicht in der Teilungsebene des Gehäuses liegen, sodass deren Montage und Demontage aufwändig ist.

Um dem abzuhelfen, wurde in der
AT 398938 B --.
vorgeschlagen, nur eine Verteilerwelle vorzusehen und für den zweiten Kraftfluss ein Ritzel auf der längeren Abtriebswelle vorzusehen, das mit dem Ritzel auf der kürzeren Abtriebswelle in direktem Eingriff steht. Damit wird das Ritzel auf der kürzeren Abtriebswelle wiederum durch zwei Zahnräder angetrieben, sodass hier ebenfalls etwa das doppelte Drehmoment übertragbar ist.

In der bekannt gemachten österreichischen Patentanmeldung A
AT 1690/98 --.
(entsprechend der
EP 995580 A --.
) sind diese beiden Lösungen miteinander kombiniert worden, d.h. hier wurde vorgeschlagen, sowohl zwei Verteilerwellen vorzusehen als auch ein Ritzel auf der längeren Abtriebswelle, das mit dem Ritzel auf der kürzeren Abtriebswelle in direktem Eingriff steht. Damit ergeben sich drei Kraftflüsse, sodass das übertragbare Drehmoment verdreifacht wird.

In dieser Patentanmeldung wurde auch noch beansprucht, drei Verteilerwellen vorzusehen, sodass das übertragbare Drehmoment vervierfacht wird. Dazu wurde allerdings kein Ausführungsbeispiel geoffenbart, sodass unklar bleibt, wie drei Verteilerwellen gleichmäßig angetrieben werden können.
Aus der DE 33 25 395 A1, die den nächstliegenden Stand der Technik bildet, ist ein Getriebe zum Antreiben der Schnecken eines Zweischneckenextruders bekannt, das zwei parallele und mit den Schnecken verbindbare Abtriebswellen aufweist. Beide Abtriebswellen tragen ein Ritzel, von welchen eines über ein mit einer Innenverzahnung versehenes Hohlrad und über mit dieser Innenverzahnung in Eingriff stehende Zahnräder antreibbar ist. Das Hohlrad ist mit einer Außenverzahnung versehen, die mit Zahnrädern zweiter Zwischenwellen in Eingriff steht, die über weitere Zahnräder von einem Antriebsmotor antreibbar sind. Der Antrieb der zweiten Abtriebswelle erfolgt analog, d,h, deren Ritzel steht über Zahnräder mit der Innenverzahnung eines weiteren Hohlrades in Verbindung. Der Aufwand ist insbesondere hinsichtlich der beiden Hohlräder groß.

In der öffentlichen Beschwerdeverhandlung über den Einspruch gegen diese Patentanmeldung
AT 1690/98 --. am 15.6.2005 wurde der Vorschlag gemacht, die drei Verteilerwellen über ein Hohlrad anzutreiben. Dies ist der gattungsbildende Stand der Technik. Es ist jedoch auch nicht einfach, mit einem Hohlrad drei Verteilerwellen gleichmäßig anzutreiben. Wenn man das Hohlrad an der Innenverzahnung mit einem Zahnrad antreibt, so ergeben sich dadurch sehr hohe radiale Kräfte, die das Hohlrad minimal im Lager verschieben und so zumindest eine Verteilerwelle dadurch entlasten (diese läuft dann leer mit). Dies ist selbst dann der Fall, wenn man davon ausgeht, dass das Hohlrad ein ideal starrer Körper ist. Wenn man auch noch in Betracht zieht, dass sich das Hohlrad elastisch verformt, werden die Verhältnisse noch ungünstiger.

### Darstellung der Erfindung

Ziel der Erfindung ist es, diese Nachteile zu vermeiden und ein Getriebe der eingangs erwähnten Art vorzuschlagen, bei dem eine optimale Verteilung der Drehmomente sichergestellt ist.

Erfindungsgemäß wird dies bei einem Getriebe der eingangs erwähnten Art durch die kennzeichnenden Merkmale des Anspruchs 1 erreicht.

Durch den Antrieb der drei Verteilerwellen über die Innenverzahnung des Hohlrades, das seinerseits über dessen Außenverzahnung und zwei Zwischenwellen angerieben wird, kann man die Lage der Zwischenwellen beliebig optimieren (die Verteilerwellen sind nicht im Weg). Außerdem heben sich die radialen Kräfte der beiden Zwischenwellen zumindest teilweise auf. Auf diese Weise können Querkräfte und elastische Verformungen weitgehend vermieden werden. Dadurch ergibt sich bei dem erfindungsgemäßen Getriebe eine sehr gute Verteilung der zu übertragenden Drehmomente, wodurch die Belastungen für die einzelnen Bauteile gering gehalten werden können und auch bei beengten Platzverhältnissen keine übermäßigen Spannungen in den einzelnen Bauteilen zugelassen werden müssen. Dadurch ergibt sich eine hohe Betriebssicherheit des Getriebes.

In diesem Zusammenhang ist es besonders vorteilhaft, die Merkmale des Anspruchs 2 vorzusehen. Durch diese Maßnahmen heben sich die bei der Übertragung des Drehmoments auftretenden Querkräfte weitgehend gegenseitig auf, sodass das Hohlrad kaum aus der Soll-Position gebracht wird. Der optimale Winkel zwischen den Axialebenen der äußeren Verteilerwellen und den Axialebenen der Zwischenwellen beträgt ca. 20°, wenn die Dicke des Hohlrades vernachlässigbar klein ist, und steigt mit der Dicke des Hohlrades an. Der optimale Winkel liegt daher zwischen 20° und 30°.

Um die beim Extrudieren mittels der Schnecken auftretenden axialen Kräfte besser aufnehmen zu können ist es vorteilhaft, die Merkmale des Anspruchs 4 vorzusehen. Da die Verzahnungen des Hohlrades in einander entgegengesetzten Richtungen schräg ausgebildet sind, bleibt das Hohlrad in axialer Richtung kräftefrei.

### Kurze Beschreibung der Zeichnungen

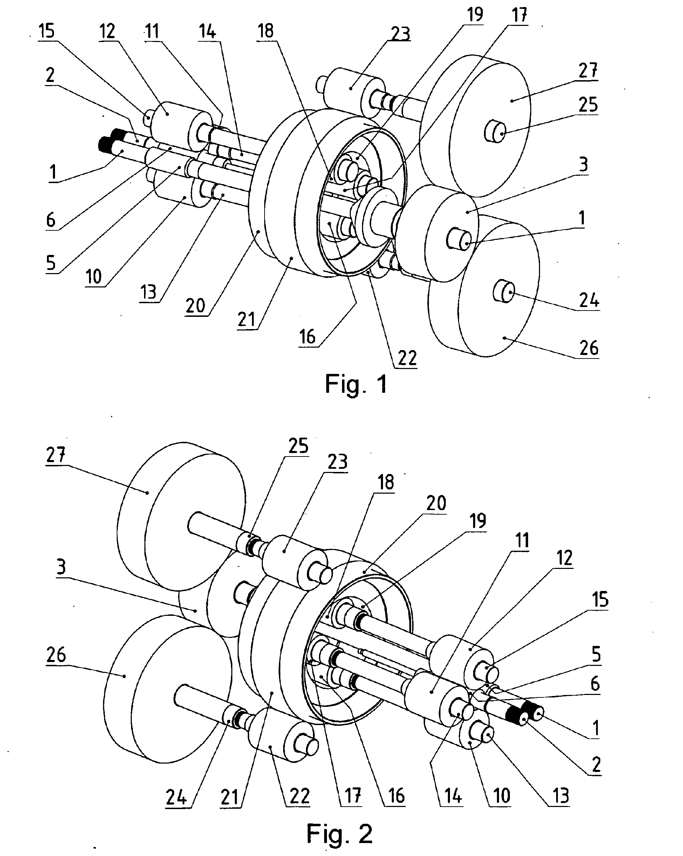

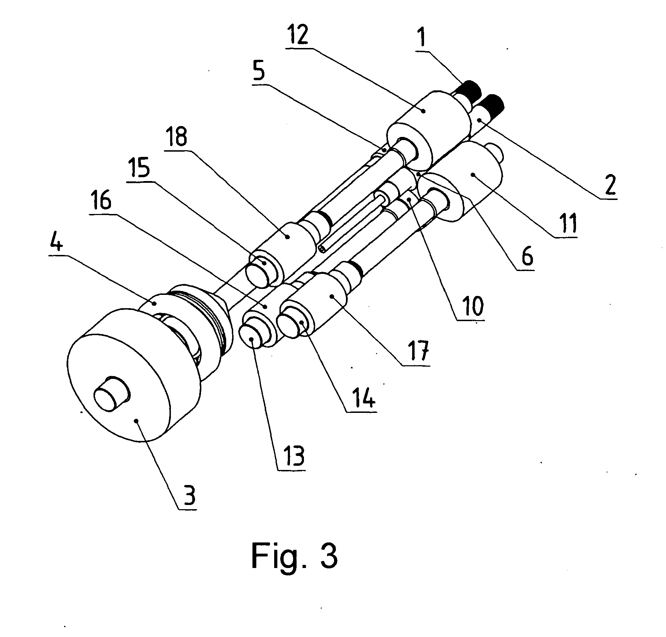

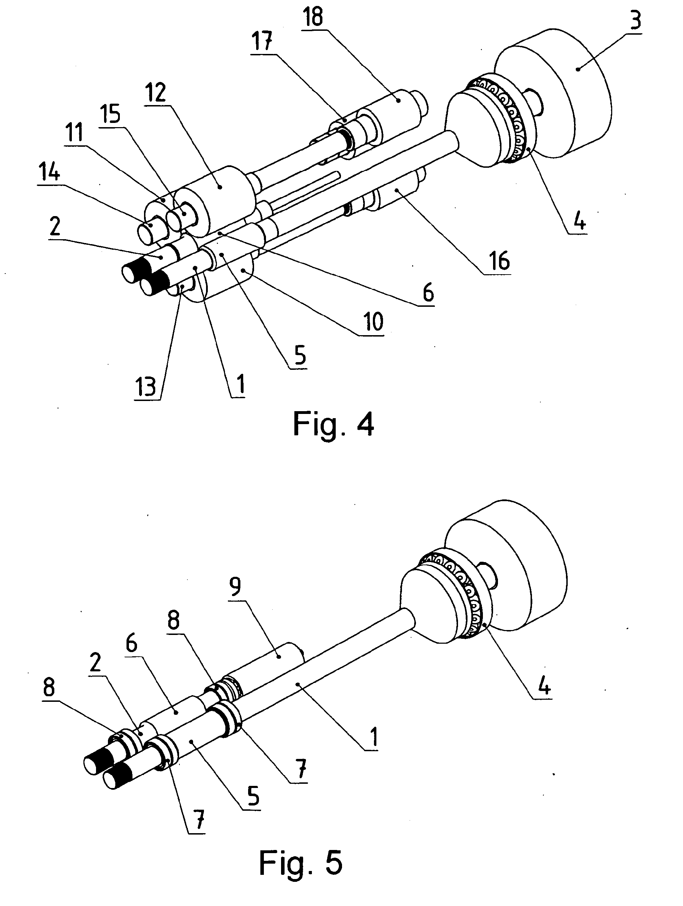

Die Erfindung wird nun anhand der Zeichnungen näher erläutert. Dabei zeigt: Fig. 1 schematisch das erfindungsgemäße Getriebe von der Antriebsseite her; Fig. 2 schematisch das Getriebe nach Fig. 1 von der Abtriebsseite her; Fig. 3 das Getriebe nach Fig. 1 und 2 von der Antriebsseite her, jedoch ohne Hohlrad und Zwischenwellen; Fig. 4 das Getriebe nach Fig. 1 und 2 von der Abtriebsseite her, jedoch ohne Hohlrad und Zwischenwellen; und Fig. 5 schematisch die Lagerung der längeren und der kürzeren Abtriebswellen.

### Bester Weg zur Ausführung der Erfindung

Auf einer längeren Abtriebswelle 1 sitzt ein mit dieser drehfest verbundenes Antriebszahnrad 3, das mit einem nicht dargestellten Ritzel eines Motors kämmt, oder die längere Abtriebswelle 1 ist mit einem Antriebsmotor gekuppelt. Weiters sitzt auf der längeren Abtriebswelle 1 ein Axiallager 4 sowie ein drehfest gehaltenes Ritzel 5, das mit einem mit der kürzeren Abtriebswelle 2 drehfest verbundenen Ritzel 6 kämmt. Auch die kürzere Abtriebswelle 2 weist ein Axiallager 9 auf. Dieses ist wegen der Nähe der längeren Abtriebswelle 1 im Durchmesser beschränkt und vorzugsweise als Tandemlager ausgebildet.

Die Ritzel 5, 6 weisen eine Schrägverzahnung auf. Diese Schrägverzahnung ist so gewählt, dass die kürzere Antriebswelle 2 in Richtung Schnecke gedrückt wird und so die auf das Lager 9 der kürzeren Antriebswelle wirkenden axialen Kräfte bei ansteigendem Drehmoment verhältnismäßig kleiner werden. Dadurch steigen zwar die axialen Kräfte auf die längere Antriebswelle 1, doch ist dies nicht problematisch, da das Axiallager 4 größer gebaut werden kann.

Wie aus Fig. 5 zu ersehen ist, sind neben dem Ritzel 5 Radiallager 7 auf der längeren Abtriebswelle 1 angeordnet. Axial zu diesen versetzt sind Radiallager 8 auf der kürzeren Abtriebswelle 2 angeordnet. Der axiale Versatz ist notwendig, um die Radiallager 7, 8 möglichst groß dimensionieren zu können. Der Abstand der Radiallager 8 vom Ritzel 6 stört nur wenig, weil sich die radialen Kräfte auf das Ritzel 6 ohnehin weitestgehend aufheben, wie noch erläutert werden wird.

Aus Gründen einer besseren Übersichtlichkeit sind die Lager 4, 7, 8 und 9 in den Fig. 1 bis 4 nur zum Teil dargestellt.

Mit dem Ritzel 6 der kürzeren Abtriebswelle 2 kämmen weiters Zahnräder 10, 11, 12, die drehfest mit Verteilerwellen 13, 14, 15 verbunden sind. Auf diesen Verteilerwellen 13, 14, 15 sitzen weiters drehfest gehaltene Zahnräder 16, 17, 18, die mit einer Innenverzahnung 19 eines Hohlrades 20 kämmen.

Dieses Hohlrad 20 ist weiters mit einer Außenverzahnung 21 versehen, wobei die Innenverzahnung 19 und die Außenverzahnung 21 als gegensinnige Schrägverzahnungen ausgebildet sind.

Die Verteilerwellen 13, 14 bzw. 14, 15 schließen Winkel von jeweils ca. 90° ein, wobei die längere Abtriebswelle 1, die kürzere Abtriebswelle 2 und die Verteilerwelle 14 in einer Ebene liegen. Damit wird das Ritzel 6 von vier Zahnrädern, die gleichmäßig über dessen Umfang verteilt sind, angetrieben, sodass sich die radialen Kräfte aufheben.

Die Außenverzahnung 21 des Hohlrades 20 kämmt mit Zahnrädern 22, 23, die drehfest mit Zwischenwellen 24, 25 verbunden sind. Auf diesen Zwischenwellen 24, 25 sind weiters Zahnräder 26, 27 drehfest gehalten, die mit dem Antriebszahnrad 3 kämmen.

Die Zwischenwellen 24, 25 sind gegenüber den Verteilerwellen 13, 15, bezogen auf die Achse der kürzeren Abtriebswelle 2, um einen Winkel von 20°-30° gegen die Verteilerwelle 14 zu versetzt angeordnet, um das Hohlrad 20 weitgehend frei von Querkräften zu halten. Dadurch wird eine gleichmäßige Aufteilung des Drehmoments auf die Verteilerwellen 13, 14, 15 erreicht.

Die sämtlichen Zahnräder sind - wie an sich bekannt - als Schrägzahnräder ausgebildet, um die axialen Kräfte, die auf die kürzere Abtriebswelle von der zugehörigen Schnecke übertragen werden, teilweise zu kompensieren und so das Axiallager 9, das im Durchmesser beschränkt ist, zu entlasten.

Aufgrund der Ausbildung des Getriebes nach den Fig. 1 bis 5 werden die Belastungen der einzelnen Zahnräder und Wellen gering gehalten, sodass über das Getriebe hohe Drehmomente auf die Schnecken über die beiden Abtriebswellen 1, 2 übertragen werden können. Dadurch kann die hohe Belastbarkeit der Schnecken voll genutzt werden, ohne dass die Gefahr eines Versagens des Getriebes besteht.

## Patentansprüche

1. Getriebe zum Antreiben der Schnecken eines Zweischneckenextruders mit zwei parallelen und mit den Schnecken verbindbaren Abtriebswellen (1, 2), wobei beide Abtriebswellen (1, 2) ein Ritzel (5 bzw. 6) aufweisen, von denen ein Ritzel (6) über ein mit einer Innenverzahnung (19) versehenes Hohlrad (20) und mit dieser Innenverzahnung (19) in Eingriff stehende Zahnräder (16, 17, 18) antreibbar ist, wobei das Hohlrad (20) weiters mit einer Außenverzahnung (21) versehen ist, die mit Zahnrädern (22, 23) zweier Zwischenwellen (24, 25) in Eingriff steht, die über weitere Zahnräder (26, 27) von einem Antriebsmotor antreibbar sind: wobei die erste Abtriebswelle (1) ein Antriebszahnrad (3) trägt, das vom Antriebsmotor antreibbar ist, wobei das Ritzel (6) der zweiten Abtriebswelle (2) mit drei Verteilerwellen (13, 14, 15) in drehfester Verbindung steht, die die Zahnräder (16, 17, 18) tragen, **dadurch gekennzeichnet, dass** die beiden Abtriebswellen unterschiedlich lang sind: und gegensinnig drehen, dassdieerste Abtriebswelle (1) dielängereund diezweite Abtriebswelle (2) diekürzere welleist, dass die beiden Ritzel (5, 6) direkt miteinander kämmen, und dass die weiteren Zahnräder (26, 27) der beiden Zwischenwellen mit dem Antriebszahnrad (3) kämmen.

2. Getriebe nach Anspruch 1, **dadurch gekennzeichnet, dass** die drei Verteilerwellen (13, 14, 15) in einem Winkel von je ca. 90° angeordnet sind und die Zwischenwellen (24, 25) in Axialebenen angeordnet sind, die zwischen den Axialebenen der äußeren und der mittleren Verteilerwellen (13, 14, 15) angeordnet sind.

3. Getriebe nach Anspruch 2, **dadurch gekennzeichnet, dass** der Winkel zwischen den Axialebenen der äußeren Verteilerwellen (13, 15) und den Axialebenen der Zwischenwellen (24, 25) 20°-30° beträgt.

4. Getriebe nach einem der Ansprüche 1 bis 3, **dadurch gekennzeichnet, dass** die Zahnräder eine Schrägverzahnung aufweisen, wobei die Innenverzahnung (19) und die Außenverzahnung (21) des Hohlrades (20) in einander entgegengesetzten Richtungen schräg ausgebildet sind.

## Claims

1. A transmission for driving the screws of a twin-screw extruder comprising two parallel drive shafts (1,2) and which can be connected with the respective screws, both drive shafts (1,2) having a gear (5 respectively 6),the gear (6) can be driven by a ring gear (20) having internal teeth (19) and by gears (16,17,18) meshing with these internal teeth (19), the ring gear (20) provided with external teeth (21) meshing with gears (22,23) of two intermediate shafts (24,25) that can be driven by a driving motor via further gears (26,27), the drive shaft (1) carrying a drive gear (3), that can be driven by the driving motor, gear (6) of the drive shaft (2) connected by a rotationally fixed connection to three distributor shafts (13,14,15) carrying the gears (16,17,18), **characterized in that** the both drive shafts are of different length, rotating opposite to each other, the drive shaft (1)is the longer one and the drive shaft (2) is the shorter one, both gears (5,6) directly mesh and further gears (26,27) of both intermediate shafts mesh with the drive gear (3).

2. The transmission according to claim 1, **characterized in that** there are the three distributor shafts (13, 14, 15) angularly spaced at approximately 90° and the intermediate shafts (24, 25) are in axial planes and between axial planes of the outer and the centre distributor shafts (13, 14, 15).

3. The transmission according to claim 2, **characterized in that** the angle between the axial planes of the outer distributor shafts (13, 15) and the axial planes of the intermediate shafts (24, 25) is 20° - 30°.

4. The transmission according to one of claims 1 to 3, **characterized in that** the gears have helical gearing, the internal teeth (19) and the external teeth (21) of the ring gear (20) being pitched oppositely to each other.

## Revendications

1. Transmission pour l'entraînement des vis sans fin d'une extrudeuse à double vis sans fin comprenant deux arbres de transmission parallèles (1, 2) pouvant être reliés à des vis sans fin, les deux arbres de transmission (1, 2) portant chacun un pignon (5, voire 6) dont l'un (6) peut être entraîné par l'intermédiaire d'une roue creuse (20) pourvue d'une denture intérieure (19), et par l'intermédiaire de roues dentées (16, 17, 18) en engrènement avec cette denture intérieure (19), la roue creuse (20) étant par ailleurs pourvue d'une denture extérieure (21) en engrènement avec les roues dentées (22, 23) de deux arbres intermédiaires (24, 25) qui peuvent être entraînés par l'intermédiaire d'autres roues dentées (26, 27) à partir d'un moteur d'entraînement, le premier arbre de transmission (1) portant une roue d'entraînement (3) pouvant être entraînée par le moteur d'entraînement, le pignon (6) du deuxième arbre de transmission (2) étant relié de façon solidaire en rotation à trois arbres répartiteurs (13, 14, 15) qui portent les roues dentées (16, 17, 18),
**caractérisée en ce que**
les deux arbres de transmission sont de longueurs différentes et tournent en sens opposés, que le premier arbre de transmission (1) est le plus long, et le deuxième arbre de transmission (2) est l'arbre le plus court, que les deux pignons (5, 6) se trouvent en engrènement direct l'un avec l'autre, et que les autres roues dentées (26, 27) des deux arbres intermédiaires sont en engrènement avec la roue d'entraînement (3).

2. Transmission selon la revendication 1,
**caractérisée en ce que**
les trois arbres répartiteurs (13, 14, 15) sont disposés à un angle d'environ 90° chacun, et que les arbres intermédiaires (24, 25) sont disposés dans des plans axiaux qui se situent entre les plans axiaux des arbres répartiteurs extérieurs et de l'arbre répartiteur central (13, 14, 15).

3. Transmission selon la revendication 2,
**caractérisée en ce que**
l'angle entre les plans axiaux des arbres répartiteurs extérieurs (13, 15) et les plans axiaux des arbres intermédiaires (24, 25) est de 20° à 30°.

4. Transmission selon l'une des revendications 1 à 3,
**caractérisée en ce que**
les roues dentées présentent une denture hélicoïdale, la denture intérieure (19) et la denture extérieure (21) de la roue creuse (20) présentant des angles d'hélice opposés.
